# EUROPÄISCHE PATENTSCHRIFT

(11) **EP 2 617 124 B1**
(45) Veröffentlichungstag und Bekanntmachung des Hinweises auf die Patenterteilung: **15.11.2017**
(21) Anmeldenummer: 11755058.2
(22) Anmeldetag: 07.09.2011
(51) Int. Cl.: H02K 5/18, H02K 11/33, H02K 9/22

(54) **ELEKTROMOTOR MIT EINER LEISTUNGSENDSTUFE UND MIT EFFIZIENTEM WÄRMETRANSPORT UND VERFAHREN**
ELECTRIC MOTOR WITH A POWER OUTPUT STAGE AND WITH EFFICIENT HEAT TRANSPORT AND METHOD
MOTEUR ÉLECTRIQUE PRÉSENTANT UN ÉTAGE FINAL DE PUISSANCE ET UN TRANSPORT DE CHALEUR EFFICACE ET PROCÉDÉ

(30) Priorität: 16.09.2010 DE 102010040875
(43) Veröffentlichungstag der Anmeldung: 24.07.2013
(73) Patentinhaber: Robert Bosch GmbH, 70442 Stuttgart (DE)
(72) Erfinder: IRION, Hans, 71083 Herrenberg (DE); BRAUN, Gerhard, 72108 Rottenburg (DE); WEHRMANN, Frank, 72770 Reutlingen (DE); VOEGELE, Georg, 88085 Langenargen (DE); HENNECKE, Thomas, 70771 Leinfelden (DE); HEIM, Michael, 71088 Holzgerlingen (DE); BRAUN, Sigmund, 72127 Kusterdingen (DE); HIRSCHLE, Johannes, 72537 Mehrstetten (DE); FINK, Alexander, 70499 Stuttgart (DE)
(86) Internationale Anmeldenummer: PCT/EP2011/065481
(87) Internationale Veröffentlichungsnummer: WO 2012/034912

(56) Entgegenhaltungen:
- WO-A1-2010/150527
- JP-A- 10 322 973
- JP-A- 2008 118 770

## Beschreibung

### Stand der Technik

Die Erfindung betrifft einen Elektromotor, insbesondere einen elektronisch kommutierten Elektromotor. Der Elektromotor weist einen Stator auf, welcher bevorzugt Statorspulen umfasst. Der Elektromotor weist auch einen Rotor und ein wenigstens den Stator und den Rotor in einem Hohlraum aufnehmendes Gehäuse auf. Der Elektromotor weist auch eine Leistungsendstufe auf, welche mit dem Stator verbunden und ausgebildet ist, den Stator zum Erzeugen eines magnetischen Drehfeldes zu bestromen. Die Leistungsendstufe weist wenigstens einen Leistungshalbleiter mit einer Wärmekontaktfläche auf, wobei die Wärmekontaktfläche mit dem Gehäuse wärmeleitend verbunden ist, sodass eine in dem Leistungshalbleiter erzeugte Wärme an das Gehäuse abgeführt werden kann. JP10322973 und JP2008118770 sind Stand der Technik.

Bei aus dem Stand der Technik bekannten Elektromotoren, insbesondere elektronisch kommutierten Elektromotoren mit einem permanentmagnetisch ausgebildeten Rotor besteht das Problem, dass Leistungshalbleiter als Bestandteil der Leistungsendstufe zum Ansteuern des Stators Wärme erzeugen, welche abgeführt werden muss, damit der Leistungshalbleiter nicht überhitzt. Die Leistungshalbleiter sind beispielsweise mit ihren Anschlüssen mit einer Leiterplatte verbunden welche durch den Leistungshalbleiter einen Wärmeeintrag erfahren kann.

### Offenbarung der Erfindung

Die Erfindung betrifft einen Elektromotor gemäss Anspruch 1. Weitere Ausgestaltungsformen der Erfindung sind in den abhängigen Ansprüchen 2 - 8 definiert. Erfindungsgemäß weist das Gehäuse einen den Hohlraum wenigstens teilweise umschließenden, - wärmeleitfähigen - Gehäusebecher auf, welcher eine Becherwand aufweist, wobei die Becherwand eine zur Wärmekontaktfläche entsprechende Gegenkontaktfläche aufweist. So kann vorteilhaft die in dem Leistungshalbleiter erzeugte Wärme an das Gehäuse, insbesondere den Gehäusebecher abgeführt werden. Weiter vorteilhaft kann die Leistungsendstufe, insbesondere der Leistungshalbleiter, zum Zusammenfügen des Elektromotors zuerst mit dem Gehäuse wärmeleitend verbunden werden, bevor ein weiterer Gehäuseteil, beispielsweise wenigstens ein Deckel zum Verschließen des Bechers mit dem Gehäusebecher verbunden wird. Beispielsweise kann der Becher einen an die Becherwand angeformten - oder trennbar mit der Becherwand verbundenen - Becherboden aufweisen. Bevorzugt erstreckt sich die Becherwand parallel zur Motorwellenachse. Weiter bevorzugt ist die Becherwand hohlzylindrisch ausgebildet.

Weiter vorteilhaft kann eine Leiterplatte auf die Leistungshalbleiter, insbesondere auf Anschlussbeine der Leistungshalbleiter aufgesteckt werden, wobei die Anschlüsse der Leistungshalbleiter mit der Leiterplatte in einem weiteren Fertigungsschritt verlötet werden können. Die so fertig montierte Einheit ermöglicht ein einfaches Aufschrauben oder Aufstecken eines das Gehäuse verschließenden Gehäusedeckels. Vorteilhaft kann so ein Steuergerät umfassend die Leistungsendstufe platzsparend in das Motorgehäuse integriert sein. Weiter vorteilhaft können Zwischenkreiskondensatoren auf der Leiterplatte montiert sein, da die Leistungsendstufe von der Leiterplatte beabstandet sein kann und so keinen Flächenbereich einer Leiterplattenfläche der Leiterplatte belegt.

In einer bevorzugten Ausführungsform weist die Leistungsendstufe drei Transistor-Halbbrücken auf, wobei jede Transistor-Halbbrücke wenigstens einen oder nur einen Leistungshalbleiter, insbesondere Leistungshalbleiter-Baustein bildet. Bevorzugt weist der Elektromotor drei Leistungshalbleiter-Bausteine auf. Die Leistungshalbleiter-Bausteine, insbesondere die Halbbrücken, können so beispielsweise eine B6-Brücke bilden. Der Leistungshalbleiter-Baustein kann beispielsweise als Mold-Modul ausgebildet sein, bei dem Transistoren der Transistor-Halbbrücke mittels eines Vergussmittels, insbesondere eines Harzes, in ein Gehäuse des Mold-Moduls eingebunden sind. Bevorzugt weist das Mold-Modul einen mit der Wärmekontaktfläche wärmeleitend verbundenen, oder diese bildenden Oberflächenbereich der Oberfläche des Mold-Moduls auf, über den Wärme an das Gehäuse des Elektromotors abgegeben werden kann. Der Oberflächenbereich kann beispielsweise durch ein wärmeleitfähiges Stanzgitter, insbesondere Kupfer-Stanzgitter gebildet sein. Das Vergussmittel ist beispielsweise ein Duroplast.

In einer bevorzugten Ausführungsform ist der Leistungshalbleiter, insbesondere mit Anschlüssen des Leistungshalbleiters, mit einer in dem Hohlraum angeordneten Leiterplatte verbunden. Die Leiterplatte weist eine Leiterplattenebene auf, welche sich bevorzugt quer zu einer Motorwellenlängsachse des Elektromotors erstreckt. Der Leistungshalbleiter ist derart angeordnet, dass die Wärmekontaktfläche beim Zusammenfügen des Leistungshalbleiters mit dem Gehäuse, insbesondere dem Gehäusebecher, entlang der Motorwellenlängsachse mit der Gegenkontaktfläche in Wirkkontakt gerät. Durch den Wirkkontakt kann wirksam Wärme von dem Leistungshalbleiter auf das Gehäuse, insbesondere den Gehäusebecher übertragen werden.

In einer bevorzugten Ausführungsform ist die Wärmekontaktfläche konvex gekrümmt, und die Gegenkontaktfläche entsprechend zur Wärmekontaktfläche konkav gekrümmt. Im Falle der konvex gekrümmten Wärmekontaktfläche kann der Gehäusebecher beispielsweise zylinderförmig gebildet sein. Bevorzugt weist die Gegenkontaktfläche in einem Schnitt quer zur Motorwellenlängsachse die konkave Krümmung auf.

In einer anderen Ausführungsform ist die Wärmekontaktfläche und die Gegenkontaktfläche jeweils eben ausgebildet. Im Falle der eben ausgebildeten Gegenkontaktfläche kann der Gehäuseteil, welcher durch den Gehäusebecher gebildet ist, vorteilhaft durch ein Gussteil, insbesondere ein Aluminiumgussteil gebildet sein. So kann der Gehäusebecher beispielsweise im Bereich der Gegenkontaktfläche eben ausgebildet und entlang einer Rotorumfangsrichtung außerhalb der Gegenkontaktfläche zylindrisch ausgebildet sein.

Bevorzugt weist der Elektromotor eine vorbestimmte Zahl Statorspulen auf, und die Gehäusebecherwand weist in Rotorumfangsrichtung die vorbestimmte Zahl Gegenkontaktflächen auf. So kann das Gehäuse für jede Halbbrücke der Leistungsendstufe eine Gegenkontaktfläche aufweisen. Die vorbestimmte Zahl ist beispielsweise drei.

Bevorzugt sind die Gegenkontaktflächen derart angeordnet, dass zwischen in Rotorumfangsrichtung zueinander benachbarten Statorspulen ein Leistungshalbleiter, insbesondere eine Transistor-Halbbrücke angeordnet ist. Vorteilhaft kann die Leistungsendstufe, insbesondere die Transistor-Halbbrücke, so besonders platzsparend im Motorgehäuse aufgenommen sein.

Erfindungsgemäß weist der Gehäusebecher im Bereich der Gegenkontaktfläche ein Führungselement auf. Das Führungselement ist ausgebildet, den Leistungshalbleiter beim Zusammenfügen mit dem Gehäusebecher zu führen und den Wirkkontakt zum Gehäuse hin herzustellen.

Dadurch kann vorteilhaft der Wirkkontakt zum Übertragen von Wärme vom Leistungshalbleiter an das Gehäuse besonders effizient hergestellt werden.

In einer bevorzugten Ausführungsform ist das Führungselement ausgebildet, den Leistungshalbleiter beim Zusammenfügen gegen die Gegenkontaktfläche zu pressen und so den Wirkkontakt zu erzeugen.

Dadurch braucht der Leistungshalbleiter beispielsweise nicht mit dem Gehäuse, insbesondere dem Gehäusebecher verschraubt zu werden.

Bevorzugt weist das Gehäuse im Bereich der Gegenkontaktfläche einen das Führungselement bildenden Gehäuseschacht auf, welcher ausgebildet ist, den Leistungshalbleiter aufzunehmen.

Weiter bevorzugt weist das Gehäuse eine Feder, insbesondere eine Blattfeder auf, welche in dem Schacht angeordnet ist und welche ausgebildet ist, den Leistungshalbleiter nach einem Einführen in den Schacht gegen die Gegenkontaktfläche zu pressen.

In einer bevorzugten Ausführungsform ist der Leistungshalbleiter von der Leiterplatte derart beabstandet, dass beim Betrieb des Elektromotors eine über die Gegenkontaktfläche abgeführte Wärme größer ist als eine in die Leiterplatte beispielsweise durch Strahlung oder Wärmefluss hineingeführte Wärme. So kann ein unnötiges Erwärmen der Leiterplatte vorteilhaft verhindert werden. Das wird vor allem durch eine räumliche Trennung des Leistungshalbleiters von der Leiterplatte bewirkt, insoweit der Leistungshalbleiter mit dem Gehäuse, insbesondere dem Gehäusebecher verbunden ist. Die Leiterplatte ist mit einer Leiterplattenebene bevorzugt quer zu einer Motorwellenlängsachse angeordnet, sodass bevorzugt nur elektrische Anschlussbeine des Leistungshalbleiters mit der Leiterplatte verbunden sind. Weiter bevorzugt verläuft eine Ebene der Wärmekontaktfläche senkrecht zur Leiterplattenebene. Offenbart ist auch ein Verfahren zum Verbinden einer Elektronikbaugruppe eines Elektromotors mit einem Gehäuse des Elektromotors. Die Elektronikbaugruppe des Elektromotors weist wenigstens einen Leistungshalbleiter zum Bestromen des Elektromotors, insbesondere eines Stators des Elektromotors auf. Der Leistungshalbleiter weist eine Wärmekontaktfläche zum Abgeben von Wärme auf, und das Gehäuse weist eine zur Wärmekontaktfläche entsprechende Gegenkontaktfläche auf.

Bei dem Verfahren gerät die Wärmekontaktfläche beim Zusammenfügen des Leistungshalbleiters mit dem Gehäuse in Richtung einer Motorwellenlängsachse mit der Gegenkontaktfläche in Wirkkontakt. Dadurch kann Wärme von dem Leistungshalbleiter an das Gehäuse abgeführt werden. Durch die Anordnung der Gegenkontaktfläche an dem Gehäuse kann die Elektronikbaugruppe vorteilhaft in nur wenigen Montageschritten mit dem Gehäuse des Elektromotors verbunden werden.

Die Erfindung wird nun im Folgenden anhand von Figuren und weiteren Ausführungsbeispielen erläutert. Weitere vorteilhafte Ausführungsformen ergeben sich aus den Merkmalen in den Figuren sowie aus den Merkmalen der abhängigen Ansprüche.
Figur 1 zeigt ein Ausführungsbeispiel für einen Elektromotor;
Figur 2 zeigt einen Querschnitt des in Figur 1 dargestellten Elektromotors;
Figur 3 zeigt ein Ausführungsbeispiel für einen abschnittsweise dargestellten Gehäusebecher eines Elektromotors;
Figur 4 zeigt ein Ausführungsbeispiel für ein Verfahren zum Herstellen eines Elektromotors.

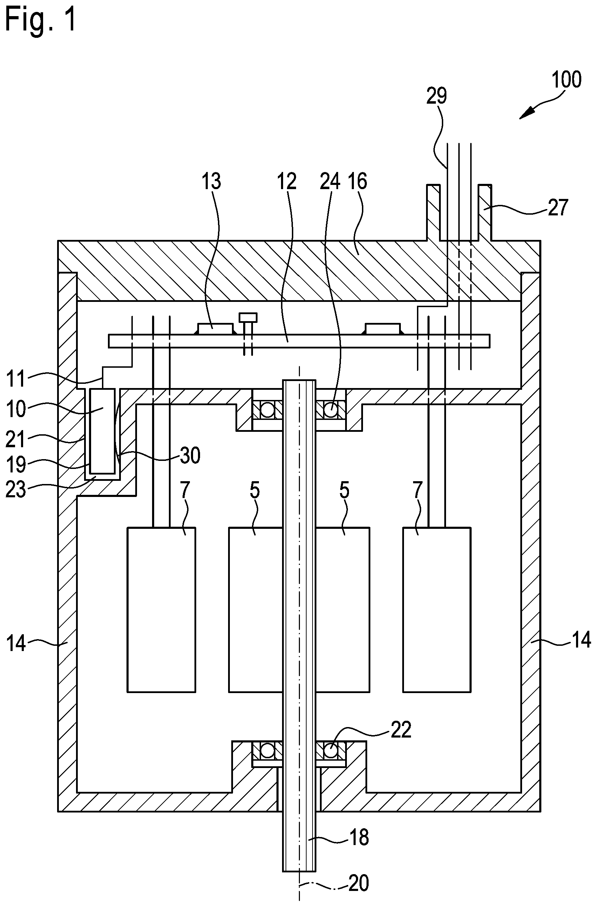

Figur 1 zeigt - schematisch - ein Ausführungsbeispiel für einen Elektromotor 1. Der Elektromotor 1 weist einen Rotor 5, einen Stator 7 umfassend beispielsweise drei Statorspulen, sowie eine Leistungsendstufe mit wenigstens einem Leistungshalbleiter auf. Der Leistungshalbleiter 10 ist in dem in Figur 1 dargestellten Längsschnitt des Elektromotors 1 beispielhaft dargestellt. Der Elektromotor 1 weist auch eine Leiterplatte 12 auf, welche mit elektronischen Bauteilen verbunden ist, von denen das elektronische Bauteil 13 beispielhaft bezeichnet ist. Die Leiterplatte 12 ist in diesem Ausführungsbeispiel auch mit dem Stator 7, und dort mit Statorspulen des Stators 7 verbunden.

Der Leistungshalbleiter 10 weist elektrische Anschlüsse auf, von denen der elektrische Anschluss 11 beispielhaft bezeichnet ist. Der Elektromotor 1 weist ein Gehäuse mit einem Gehäusebecher 14 auf. Der Gehäusebecher umschließt einen Hohlraum, welcher ausgebildet ist, den Stator 7, den Rotor 5, die Leiterplatte 12 und die Leistungshalbleiter 10 aufzunehmen. Der Elektromotor 1 weist auch einen Gehäusedeckel 16 auf, welcher ausgebildet ist, den von dem Gehäusebecher 14 umschlossenen Hohlraum zu verschließen. Der Elektromotor 1 weist auch eine Motorwelle 18 auf, welche mit dem Rotor 5 drehfest verbunden ist. Die Motorwelle 18 ist mittels eines abtriebsseitigen Motorlagers 22 und eines weiteren Motorwellenlagers 24 um eine Motorwellenlängsachse 20 drehbar gelagert.

Der Leistungshalbleiter 10 weist eine Wärmekontaktfläche 19 auf, welche - nach einem Einführen des Leistungshalbleiters 10 in einen zum Aufnehmen des Leistungshalbleiters 10 ausgebildeten Hohlraum oder Schacht 23 des Gehäusebechers 14 mit einer Gegenkontaktfläche 21 des Gehäusebechers 14 in Wirkkontakt gerät.

Der Gehäusebecher 14 des Elektromotors 1 weist auch eine Blattfeder 30 auf, welche sich wenigstens teilweise in den Schacht 23 hinein erstreckt und welche angeordnet und ausgebildet ist, - an einer Schachtwand des Schachts 23 abstützend - den Leistungshalbleiter 10 mit seiner Wärmekontaktfläche 19 gegen den Gehäusebecher 14, und dort gegen die Gegenkontaktfläche 21 zu pressen.

Das Motorwellenlager 24 ist durch einen Steg 17 gehalten, wobei der Steg 17 sich von einer Wand des Gehäusebechers 14 radial nach innen zur Motorwellenlängsachse 20 hin erstreckt.

Der in Figur 1 dargestellte Gehäusedeckel 16 weist beispielsweise eine an diesen angeformte Buchse 27 mit elektrischen Kontakten zum elektrischen Verbinden des Elektromotors 1 auf. Von den elektrischen Kontakten zum Verbinden des Elektromotors ist der Kontakt 29 beispielhaft bezeichnet.

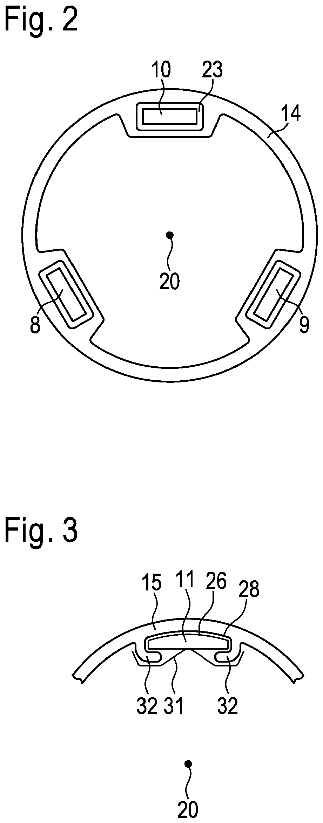

Figur 2 zeigt - schematisch - einen Querschnitt des in Figur 1 dargestellten Elektromotors 1. Dargestellt ist der Gehäusebecher 14, welcher für die in Figur 1 beispielhaft dargestellten Leistungshalbleiter 10, sowie für zwei weitere Leistungshalbleiter 8 und 9 jeweils einen Hohlraum, insbesondere einen Schacht aufweist, wobei der Schacht 23 für den Leistungshalbleiter 10 beispielhaft bezeichnet ist. Dargestellt ist auch die Motorwellenlängsachse 20, welche in Figur 2 quer zur in Figur 2 gezeigten Schnittebene des Querschnitts verläuft.

Figur 3 zeigt - schematisch - ein Ausführungsbeispiel für einen Gehäusebecher 15 eines Elektromotors. Der Gehäusebecher 15 weist - anders als der in den Figuren 1 und 2 dargestellte Gehäusebecher 14 - eine Gegenkontaktfläche 28 auf, welche konkav gekrümmt ist und entsprechend zu einer konvex gekrümmten Wärmekontaktfläche 26 eines Leistungshalbleiters 11 verläuft. Die Motorwellenlängsachse 20 verläuft in der in Figur 3 gezeigten Querschnittdarstellung des umfangsabschnittsweise gezeigten Gehäusebechers 15 quer zur Schnittebene der in Figur 3 gezeigten Schnittdarstellung. Der Gehäusebecher 15 weist in dem in Figur 3 gezeigten Ausführungsbeispiel zwei Haken oder Schienen 32 auf, welche an den Gehäusebecher 15 angeformt sind und welche jeweils ausgebildet sind, den Leistungshalbleiter 11 wenigstens teilweise formschlüssig zu hintergreifen und die Wärmekontaktfläche 26 des Leistungshalbleiters 11 gegen die Gegenkontaktfläche 28 des Gehäusebechers 15 zu halten oder zu pressen.

Der Gehäusebecher 15 kann beispielsweise zum Anpressen des Leistungshalbleiters 11 an den Gehäusebecher 15 eine Blattfeder 31 aufweisen, welche ausgebildet und angeordnet ist, den Leistungshalbleiter 11 mit seiner Wärmekontaktfläche 26 gegen die Gegenkontaktfläche 28 des Gehäusebechers 15 zu pressen.

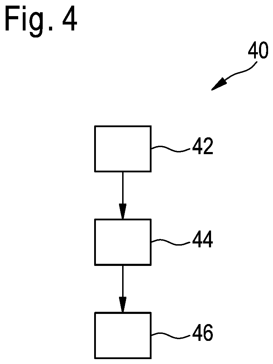

Figur 4 zeigt ein Beispiel, nicht Teil der beanspruchten Erfindung, für ein Verfahren zum Verbinden einer Elektronikbaugruppe eines Elektromotors mit einem becherförmigen Gehäuseteil, insbesondere Gehäusebecher eines Gehäuses des Elektromotors. Die Elektronikbaugruppe des Elektromotors weist wenigstens einen Leistungshalbleiter zum Bestromen des Elektromotors, insbesondere eines Stators des Elektromotors auf. Der Leistungshalbleiter weist eine Wärmekontaktfläche zum Abgeben von Wärme auf, und das Gehäuseteil weist eine zur Wärmekontaktfläche entsprechende Gegenkontaktfläche auf.

Bei dem Verfahren wird in einem Schritt 42 die Wärmekontaktfläche beim Zusammenfügen des Leistungshalbleiters mit dem Gehäuseteil in Richtung einer Motorwellenlängsachse mit der Gegenkontaktfläche in Wirkkontakt gebracht. Dadurch kann Wärme von dem Leistungshalbleiter an das Gehäuseteil abgeführt werden.

In einem weiteren Schritt 44 wird eine Elektronikbaugruppe, insbesondere eine Leiterplatte, mit dem Leistungshalbleiter elektrisch verbunden, beispielsweise durch Verlöten von Anschlüssen des Leistungshalbleiters mit der Elektronikbaugruppe, insbesondere der Leiterplatte.

In einem weiteren Schritt 46 wird ein Gehäusedeckel mit dem Gehäuseteil, insbesondere einem einen Hohlraum umschließenden Gehäusebecher verbunden, so dass der wenigstens eine Leistungshalbleiter, die Elektronikbaugruppe, ein Rotor und ein Stator des Elektromotors in dem Hohlraum eingeschlossen sind.

Durch die Anordnung der Gegenkontaktfläche an dem Gehäuse kann die Elektronikbaugruppe vorteilhaft in nur wenigen Montageschritten mit dem Gehäuse des Elektromotors verbunden werden.

## Patentansprüche

1. Elektromotor (1), insbesondere elektronisch kommutierter Elektromotor, mit einem Stator (7), einem Rotor (5) und einem wenigstens den Rotor (5) und den Stator (7) in einem Hohlraum aufnehmenden Gehäuse (14, 16),
wobei der Elektromotor (1) eine Leistungsendstufe (8, 9, 10, 11) aufweist, welche mit dem Stator (7) verbunden und ausgebildet ist, den Stator (7) zum Erzeugen eines magnetischen Drehfeldes zu bestromen, wobei die Leistungsendstufe wenigstens einen Leistungshalbleiter (8, 9, 10, 11) mit einer Wärmekontaktfläche (19, 26) aufweist, wobei die Wärmekontaktfläche (19, 26) mit dem Gehäuse (14) wärmeleitend verbunden ist, so dass eine in dem Leistungshalbleiter (8, 9, 10, 11) erzeugte Wärme an das Gehäuse (14) abgeführt werden kann, wobei das Gehäuse (14, 16) einen den Hohlraum wenigstens teilweise umschließenden wärmeleitfähigen Gehäusebecher (14) aufweist, wobei der Gehäusebecher (14) eine Becherwand aufweist, welche eine zur Wärmekontaktfläche (19, 26) entsprechende Gegenkontaktfläche (21, 28) aufweist, **dadurch gekennzeichnet, dass** der Gehäusebecher (14) im Bereich der Gegenkontaktfläche (21, 28) ein Führungselement (23, 32) aufweist, welches ausgebildet ist, den Leistungshalbleiter (8, 9, 10, 11) beim Zusammenfügen mit dem Gehäusebecher zu führen und den Wirkkontakt herzustellen.

2. Elektromotor (1) nach Anspruch 1,
**dadurch gekennzeichnet, dass**
das Gehäuse im Bereich der Gegenkontaktfläche (21, 28) einen das Führungselement bildenden Gehäuseschacht (23) aufweist, welcher ausgebildet ist, den Leistungshalbleiter (8, 9, 10, 11) aufzunehmen.

3. Elektromotor (1) nach Anspruch 1 oder 2,
**dadurch gekennzeichnet, dass**
das Führungselement (23, 32, 30, 31) ausgebildet ist, den Leistungshalbleiter beim Zusammenfügen gegen die Gegenkontaktfläche (21, 28) zu pressen und so den Wirkkontakt zu erzeugen.

4. Elektromotor (1) nach Anspruch 3,
**dadurch gekennzeichnet, dass**
das Gehäuse eine Feder (30, 31) aufweist, welche in dem Gehäuseschacht (23) angeordnet ist und welche ausgebildet ist, den Leistungshalbleiter (8, 9, 10, 11) nach einem Einführen in den Gehäuseschacht (23) gegen die Gegenkontaktfläche(21, 28) zu pressen.

5. Elektromotor (1) nach einem der vorhergehenden Ansprüche,
**dadurch gekennzeichnet, dass**
der Elektromotor (1), insbesondere der Stator, eine vorbestimmte Zahl Statorspulen aufweist und die Becherwand des Gehäusebechers (14) in Rotorumfangsrichtung die vorbestimmte Zahl Gegenkontaktflächen (21, 28) aufweist.

6. Elektromotor (1) nach Anspruch 5,
**dadurch gekennzeichnet, dass**
die Gegenkontaktflächen (21, 28) derart angeordnet sind, dass zwischen in Rotorumfangsrichtung zueinander benachbarten Statorspulen ein Leistungshalbleiter (8, 9, 10, 11) angeordnet ist.

7. Elektromotor (1) nach einem der vorhergehenden Ansprüche,
**dadurch gekennzeichnet, dass**
die Wärmekontaktfläche (19) und die Gegenkontaktfläche (21) jeweils eben ausgebildet sind.

8. Elektromotor (1) nach einem der vorhergehenden Ansprüche 1 bis 6,
**dadurch gekennzeichnet, dass**
die Wärmekontaktfläche (26) konvex gekrümmt ist und die Gegenkontaktfläche (28) entsprechend zur Wärmekontaktfläche (26) konkav gekrümmt ist.

## Claims

1. Electric motor (1), in particular an electronically commutated electric motor, having a stator (7), a rotor (5) and a housing (14, 16) which accommodates at least the rotor (5) and the stator (7) in a hollow space,
wherein the electric motor (1) has a power output stage (8, 9, 10, 11) which is connected to the stator (7) and is designed to supply power to the stator (7) in order to generate a rotating magnetic field,
wherein the power output stage has at least one power semiconductor (8, 9, 10, 11) with a thermal contact area (19, 26), wherein the thermal contact area (19, 26) is connected to the housing (14) so as to conduct heat, with the result that heat which is generated in the power semiconductor (8, 9, 10, 11) can be dissipated to the housing (14),
wherein the housing (14, 16) has a thermally conductive housing cup (14) which at least partially surrounds the hollow space, wherein the housing cup (14) has a cup wall which has a mating contact area (21, 28) which corresponds to the thermal contact area (19, 26),
**characterized in that** the housing cup (14) has a guide element (23, 32) in the region of the mating contact area (21, 28), said guide element being designed to guide the power semiconductor (8, 9, 10, 11) when it is joined to the housing cup and to establish the operative contact.

2. Electric motor (1) according to Claim 1,
**characterized in that**
the housing has a housing shaft (23), which forms the guide element and is designed to accommodate the power semiconductor (8, 9, 10, 11), in the region of the mating contact area (21, 28).

3. Electric motor (1) according to Claim 1 or 2,
**characterized in that**
the guide element (23, 32, 30, 31) is designed to press the power semiconductor against the mating contact area (21, 28) during assembly and thereby to generate the operative contact.

4. Electric motor (1) according to Claim 3,
**characterized in that**
the housing has a spring (30, 31) which is arranged in the housing shaft (23) and which is designed to press the power semiconductor (8, 9, 10, 11) against the mating contact area (21, 28) after it has been inserted into the housing shaft (23).

5. Electric motor (1) according to one of the preceding claims,
**characterized in that**
the electric motor (1), in particular the stator, has a predetermined number of stator coils and the cup wall of the housing cup (14) has the predetermined number of mating contact areas (21, 28) in the rotor circumferential direction.

6. Electric motor (1) according to Claim 5,
**characterized in that**
the mating contact areas (21, 28) are arranged in such a way that a power semiconductor (8, 9, 10, 11) is arranged between stator coils which are adjacent to one another in the rotor circumferential direction.

7. Electric motor (1) according to one of the preceding claims,
**characterized in that**
the thermal contact area (19) and the mating contact area (21) are each flat.

8. Electric motor (1) according to one of the preceding Claims 1 to 6,
**characterized in that**
the thermal contact area (26) is convexly curved, and the mating contact area (28) is concavely curved so as to correspond to the thermal contact area (26).

## Revendications

1. Moteur électrique (1), en particulier un moteur électrique commuté électroniquement, comportant un stator (7), un rotor (5) et un carter (14, 16) logeant au moins le rotor (5) et le stator (7) dans un espace creux, dans lequel le moteur électrique (1) comporte également un étage final de puissance (8, 9, 10, 11) qui est relié au stator (7) et est réalisé de manière à alimenter en courant le stator (7) afin de produire un champ magnétique tournant, dans lequel l'étage final de puissance comporte au moins un semi-conducteur de puissance (8, 9, 10, 11) muni d'une surface de contact thermique (19, 26), dans lequel la surface de contact thermique (19, 26) est reliée de manière thermiquement conductrice au carter (14) de manière à ce qu'une chaleur produite dans le semi-conducteur de puissance (8, 9, 10, 11) puisse être dissipée sur le carter (14), dans lequel le carter (14, 16) comporte un godet (14) thermiquement conducteur entourant au moins partiellement l'espace creux, dans lequel le godet (14) comporte une paroi de godet munie d'une surface de contact complémentaire (21, 28) correspondant à la surface de contact thermique (19, 26),
**caractérisé en ce que** le godet (14) comporte, dans la zone de la surface de contact complémentaire (21, 28), un élément de guidage (23, 32) qui est réalisé de manière à guider le semi-conducteur de puissance (8, 9, 10, 11) lors de l'assemblage avec le godet et pour établir le contact fonctionnel avec celui-ci.

2. Moteur électrique (1) selon la revendication 1,
**caractérisé en ce que**, dans la zone de la surface de contact complémentaire (21, 28), le boîtier comporte une gaine de carter (23) qui est réalisée de manière à loger le semi-conducteur de puissance (8, 9, 10, 11).

3. Moteur électrique (1) selon la revendication 1 ou 2,
**caractérisé en ce que** l'élément de guidage (23, 32, 30, 31) est réalisé de manière à comprimer lors de l'assemblage le semi-conducteur de puissance contre la surface de contact complémentaire (21, 28) et pour ainsi produire le contact fonctionnel.

4. Moteur électrique (1) selon la revendication 3,
**caractérisé en ce que** le carter comporte un ressort (30, 31) qui est disposé dans la gaine de carter (23) et qui est réalisé de manière à comprimer le semis-conducteur de puissance (8, 9, 10, 11) contre la surface de contact complémentaire (21, 28) après une insertion dans la gaine de carter (23).

5. Moteur électrique (1) selon l'une quelconque des revendications précédentes,
**caractérisé en ce que** le moteur électrique (1), en particulier le stator, comporte un nombre prédéterminé de bobines de stator et **en ce que** la paroi de godet du godet (14) présente ledit nombre prédéterminé de surfaces de contact complémentaires (21, 28) dans la direction circonférentielle du rotor.

6. Moteur électrique (1) selon la revendication 5,
**caractérisé en ce que** les surfaces de contact complémentaires (21, 28) sont disposées de manière à ce qu'un semi-conducteur de puissance (8, 9, 10, 11) soit disposé entre des bobines de stator mutuellement voisines dans la direction circonférentielle du rotor.

7. Moteur électrique (1) selon l'une quelconque des revendications précédentes,
**caractérisé en ce que** la surface de contact thermique (19) et la surface de contact complémentaire (21) sont respectivement réalisées de manière plane.

8. Moteur électrique (1) selon l'une quelconque des revendications 1 à 6,
**caractérisé en ce que** la surface de contact thermique (26) présente une courbure convexe et **en ce que** la surface de contact complémentaire (28) présente une courbure concave correspondant à la surface de contact thermique (26).
